(19) Europäisches Patentamt
European Patent Office
Office européen des brevets

(11) Publication number: 0 164 208
B1

(12) # EUROPEAN PATENT SPECIFICATION

(45) Date of publication of patent specification: 09.11.88

(51) Int. Cl.$^4$: C 01 B 33/28, B 01 J 29/26

(21) Application number: 85302941.1

(22) Date of filing: 26.04.85

(54) **Preparation of zeolite beta.**

(30) Priority: 10.05.84 US 608847

(43) Date of publication of application:
11.12.85 Bulletin 85/50

(45) Publication of the grant of the patent:
09.11.88 Bulletin 88/45

(84) Designated Contracting States:
BE DE FR GB IT NL SE

(56) References cited:
EP-A-0 055 046
EP-A-0 159 846
FR-A-2 429 182
US-A-3 699 139

(73) Proprietor: MOBIL OIL CORPORATION
150 East 42nd Street
New York New York 10017 (US)

(72) Inventor: Calvert, Robert Bruce
157 Hayward Mill Road
Concord Mass. 01742 (US)
Inventor: Chang, Clarence Dayton
11 Murray Place
Princeton N.J. 08540 (US)
Inventor: Valyocsik, Ernest William
960 Randolph Drive
Yardley Pa. 19067 (US)

(74) Representative: Carpmael, John William Maurice et al
CARPMAELS & RANSFORD 43 Bloomsbury Square
London, WC1A 2RA (GB)

EP 0 164 208 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new method for synthesis of zeolite Beta.

Crystalline zeolite Beta, which is identified by its x-ray diffraction pattern, and its conventional preparation are disclosed in US—A—3,308,069.

According to the invention a method for preparing zeolite Beta exhibiting an extended product silica/alumina mole ratio range, catalytic activity and other valuable properties, comprises forming a reaction mixture containing sources of alkali metal oxide, an organic nitrogen-containing cation, an oxide of aluminum, an oxide of silicon and water and having a composition, in terms of mole ratios, within the following ranges:

| | Broad | Preferred |
|---|---|---|
| $SiO_2Al_2O_3$ | 20—200 | 30—120 |
| $H_2O/SiO_2$ | 10—200 | 20—60 |
| $OH^-/SiO_2$ | 0.10—2.0 | 0.20—1.0 |
| $M/SiO_2$ | 0.05—1.0 | 0.10—0.6 |
| $R/SiO_2$ | 0.10—2.0 | 0.20—1.0 |

wherein R is a cation derived from a dibenzyldimethylammonium compound which has been added as such to the reaction mixture and M is an alkali metal ion, and maintaining the mixture until crystals of the zeolite Beta are formed. The quantity of $OH^-$ is calculated only from the inorganic sources of alkali without any organic base contribution. Thereafter, the crystals are separated from the liquid and recovered. Reaction conditions required consist of heating the foregoing reaction mixture to a temperature of from about 80°C to about 200°C for a period of time of from about 24 hours to about 100 days. A more preferred temperature range is from about 100°C to about 160°C with the amount of time at a temperature in such range being from about 72 hours to about 40 days. The solid product is separated from the reaction medium, as by cooling the whole to room temperature, filtering and water washing.

Zeolite Beta synthesized under conventional procedure is known to have catalytic application, but the range of product silica/alumina mole ratio is relatively limited. When synthesized in accordance with the present method, it exhibits silica/alumina mole ratios over a wide range and significantly enhanced catalytic activity for certain conversions of interest, including hydroisomerization and cracking. Further, the prior conventional reaction mixture for preparation of crystalline zeolite Beta, i.e. requiring a tetraethylammonium hydroxide directing agent, is more costly than the present invention method, especially when the chloride salt of dibenzyldimethylammonium is used as directing agent. The present method allows production of relatively pure zeolite Beta.

The particular effectiveness of the presently required dibenzyldimethylammonium compound, when compared with other directing agents, is believed due to its ability to function as a template in the nucleation and growth of zeolite Beta crystals.

The reaction mixture composition can be prepared from materials which supply the appropriate oxide. Such compositions include aluminates, alumina, silicates, silica hydrosol, silica gel, silicic acid and hydroxides. Each oxide component utilized in the reaction mixture for preparing the zeolite can be supplied by one or more essential reactants and they can be mixed together in any order. For example, any oxide can be supplied by an aqueous solution, sodium hydroxide or by an aqueous solution of a suitable silicate; the organic cation can be supplied by the directing agent compound of that cation, such as, for example, the hydroxide or a salt, e.g. halide, such as chloride, bromide or iodide. The reaction mixture can be prepared either batchwise or continuously. Crystal size and crystallization time will vary with the nature of the reaction mixture employed.

The dibenzyldimethylammonium compound may be, as non-limiting examples, the hydroxide or the halide, preferably the chloride.

Zeolite Beta freshly synthesized in accordance with the invention will usually conform with the formula in terms of mole ratios of oxides and in the anhydrous state:

$$(0.05 \text{ to } 1.0)\ R_2O:\ (0.1 \text{ to } 1.5)\ M_{2/n}O$$
$$(0.4 \text{ to } 5)\ Al_2O_3:\ (100)\ SiO_2$$

wherein M is at least one cation having a valence n and R is the cation derived from a dibenzyldimethylammonium compound, above described.

The original cations can be replaced, at least in part, by calcination and/or ion exchange with another cation. Thus, the original alkali metal cations are exchanged into a hydrogen or hydrogen ion precursor form or a form in which the original cation has been replaced by a metal of Groups IIA, IIIA, IVA, IB, IIB, IIIB,

IVB, VIB or VIII of the Periodic Table. Thus, for example, it is contemplated to exchange the original cations with ammonium ions or with hydronium ions. Catalytically active forms of these would include, in particular, hydrogen, rare earth metals, aluminum, metals of Groups II and VIII of the Periodic Table and manganese.

The x-ray diffraction pattern of zeolite Beta has the characteristic lines shown in Table 1.

TABLE 1

| Interplanar d-spacing (A) | Relative intensity ($I/I_o$) |
|---|---|
| 11.5 ±0.4 | M—S |
| 7.4 ±0.2 | W |
| 6.6 ±0.15 | W |
| 4.15±0.10 | W |
| 3.97±0.10 | VS |
| 3.00±0.07 | W |
| 2.05±0.05 | W |

These values were determined by standard technique. The radiation was the K-alpha doublet of copper, and a diffraction equipped with a scintillation counter and a strip chart pen recorder was used. The peak heights, I, and the positions as a function of two times theta, where theta is the Bragg angle, were read from the spectometer chart. From these, the relative intensities, 100 $I/I_o$ where $I_o$ is the intensity of the strongest line or peak, and d (obs.), the interplanar spacing in Angstrom units (A) corresponding to the recorded lines, were calculated. In Table 1 the relative intensities are given in terms of the symbols W=weak, M=medium, S=strong and VS=very strong. Ion exchanged forms of the zeolite manifest substantially the same pattern with some minor shifts in interplanar spacing and variation in relative intensity. Other minor variations can occur depending on the silicon to aluminum ratio of the particular sample and its thermal history.

While the crystalline silicate of the present invention may be used in a wide variety of organic compound, e.g. hydrocarbon compound, conversion reactions, it is notably useful in the processes of low pressure hydrocracking, hydroisomerization dewaxing and cracking. Other conversion processes for which improved zeolite Beta may be utilized in one or more of its active forms include, for example, hydrocracking and converting light aliphatics to aromatics such as in US—A—3,760,024.

Zeolite Beta prepared in accordance herewith can be used either in the organic nitrogen-containing and alkali metal containing form, the alkali metal form and hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith, for example, by in the case of platinum, treating the zeolite with a platinum metal-containing ion. Suitable platinum compounds for this purpose include chloroplatinic acid, platinous chloride and various compounds containing the platinum amine complex. Combinations of metals and methods for their introduction can also be used.

Zeolite Beta, when employed either as an adsorbent or as a catalyst, should be dehydrated at least partially, suitably by heating to a temperature in the range of from about 200°C to about 600°C in an inert atmosphere, such as air, nitrogen, etc. and at atmospheric or subatmospheric pressures for between 1 and 48 hours. Dehydration can also be performed at lower temperature merely by placing the zeolite in a vacuum, but a longer time is required to obtain a particular degree of dehydration. The organic cations of freshly synthesized zeolite Beta can be decomposed by heating to a temperature up to about 550°C for from 1 hour to about 48 hours.

As above mentioned, zeolite Beta prepared in accordance herewith can have the original cations associated therewith replaced by a wide variety of other cations according to techniques well known in the art. Typical replacing cations include hydrogen, ammonium and metal cations including mixtures thereof. Of the replacing metallic cations, particular preference is given to cations of metals such as rare earths, Mn, Ca, Mg, Zn, Cd, Pd, Ni, Cu, Ti, Al, Sn, Fe and Co.

Typical ion exchange technique would be to contact the synthetic zeolite with a salt of the desired replacing cation or cations. Although a wide variety of salts can be employed, particular preference is given to chlorides, nitrates and sulfates.

Catalysts comprising zeolite Beta prepared according to the invention may be formed in a wide variety of particle sizes. Generally speaking, the particles can be in the form of a powder, a granule, or a molded product, such as extrudate having particle size sufficient to pass through a 2 mesh (Tyler) screen and be retained on a 400 mesh (Tyler) screen. In cases where the catalyst is molded, such as by extrusion, the crystalline silicate can be extruded before drying or dried or partially dried and then extruded.

In the case of many catalysts it is desirable to composite a zeolite with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina and are described in our EP—A—1695.

Employing a catalytically active form of the composition of this invention containing a hydrogenation component, reforming stocks can be reformed employing a temperature between 370°C and 540°C. The pressure can be between 100 and 1000 psig (7.9 to 70 bar), but is preferably between 200 and 700 psig (14.8 to 49.3 bar). The liquid hourly space velocity is generally between 0.1 and 10 $hr^{-1}$ preferably between 0.5 and 4 $hr^{-1}$ and the hydrogen to hydrocarbon mole ratio is generally between 1 and 20, preferably between 4 and 12.

The catalyst can also be used for hydroisomerization of normal paraffins, when provided with a hydrogenation component, e.g. platinum. Hydroisomerization is carried out at a temperature between 90°C to 370°C, preferably 140°C to 290°C, with a liquid hourly space velocity between 0.01 and 2 $hr^{-1}$, preferably between 0.25 and 0.50 $hr^{-1}$, employing hydrogen such that the hydrogen to hydrocarbon mole ratio is between 1 and 5. Additionally, the catalyst can be used for olefin or aromatics isomerization employing temperatures between 0°C and 370°C.

The catalyst can also be used for reducing the pour point of gas oils. This process is carried out at a liquid hourly space velocity between about 10 and about 30 $hr^{-1}$ and a temperature between about 400°C and about 540°C.

Other reactions which can be accomplished employing the catalyst of this invention containing a metal, e.g. platinum, include hydrogenation-dehydrogenation reactions and desulfurization reactions, olefin polymerization (oligomerization), and other organic compound conversions such as the conversion of alcohols (e.g. methanol) to hydrocarbons.

In order more fully to illustrate the nature of the invention and the manner of practicing it, the following examples are presented.

Example 1

A 1 gram quantity of $NaAlO_2$ (0.012 mole) and 5.4 grams NaOH (0.135 mole) were dissolved in 100 ml distilled water. The resulting solution was mixed with a solution of 65.4 grams dibenzyldimethylammonium chloride in 250 ml distilled water. To this mixture was added 80 grams of colloidal dispersion of 30 wt.% $SiO_2$ (Ludox) with agitation.

The reaction mixture composition in terms of mole ratios was as follows:

$$SiO_2/Al_2O_3 = 102$$

$$H_2O/SiO_2 = 23$$

$$OH^-/SiO_2 = 0.34$$

$$Na^+/SiO_2 = 0.18$$

$$R/SiO_2 = 0.62$$

The resulting gel was stirred vigorously for 10 minutes, and then heated to reflux (about 98°C) with stirring at 100 rpm for 30 days.

The resulting crystalline product was filtered from the reaction liquid, washed with water, and then dried at about 110°C. X-ray analysis showed the product crystals to be zeolite Beta having characteristic lines as shown in Table 1.

Example 2

Example 1 repeated with dibenzyldimethylammonium hydroxide as the directing agent in place of the chloride.

The crystalline product was zeolite Beta having characteristic x-ray diffraction lines as shown in Table 1.

**Claims**

1. A method for synthesizing zeolite Beta which comprises preparing a mixture containing sources of alkali metal (M) oxide, an oxide of aluminum, a dibenzyldimethylammonium (R) compound, added as such

to said mixture, an oxide of silicon and water and having a composition, in terms of mole ratios, within the following ranges:

| | | |
|---|---|---|
| $SiO_2/Al_2O_3$ | = | 20—200 |
| $H_2O/SiO_2$ | = | 10—200 |
| $OH^-/SiO_2$ | = | 0.10—2.0 |
| $M/SiO_2$ | = | 0.05—1.0 |
| $R/SiO_2$ | = | 0.10—2.0 |

and maintaining the mixture at a temperature of 80°C to 200°C until crystals of the zeolite are formed.

2. The method of Claim 1 wherein said mixture has a composition, in terms of mole ratios, as follows:

| | | |
|---|---|---|
| $SiO_2/Al_2O_3$ | = | 30—120 |
| $H_2O/SiO_2$ | = | 20—60 |
| $OH^-/SiO_2$ | = | 0.20—1.0 |
| $M/SiO_2$ | = | 0.10—0.6 |
| $R/SiO_2$ | = | 0.20—1.0 |

3. The method of Claim 1 or Claim 2 wherein said dibenzyldimethylammonium compound is a halide or the hydroxide.

4. The method of Claim 3 wherein said halide is chloride or bromide.

**Patentansprüche**

1. Verfahren zur Synthese von Zeolith-Beta, bei dem eine Mischung hergestellt wird, die Quellen eines Alkalimetall (M)-Oxids, eines Aluminiumoxids, einer Dibenzyldimethylammonium (R)-Verbindung, die als solche dieser Mischung zugegeben wurde, eines Siliziumoxids und Wasser enthält, und bezogen auf die Molverhältnisse eine Zusammensetzung innerhalb der folgenden Bereich aufweist:

| | | |
|---|---|---|
| $SiO_2/Al_2O_3$ | = | 20—200 |
| $H_2O/SiO_2$ | = | 10—200 |
| $OH^-/SiO_2$ | = | 0,10—2,0 |
| $M/SiO_2$ | = | 0,05—1,0 |
| $R/SiO_2$ | = | 0,10—2,0 |

und diese Mischung bei einer Temperatur von 80°C bis 200°C gehalten wird, bis die Kristalle des Zeoliths gebildet sind.

2. Verfahren nach Anspruch 1, worin die Mischung bezogen auf die Molverhältnisse die folgende Zusammensetzung aufweist:

| | | |
|---|---|---|
| $SiO_2/Al_2O_3$ | = | 30—120 |
| $H_2O/SiO_2$ | = | 20—60 |
| $OH^-/SiO_2$ | = | 0,20—1,0 |
| $M/SiO_2$ | = | 0,10—0,6 |
| $R/SiO_2$ | = | 0,20—1,0 |

3. Verfahren nach Anspruch 1 oder 2, worin die Dibenzyldimethylammonium-Verbindung ein Halogenid oder das Hydroxid ist.

4. Verfahren nach Anspruch 3, worin das Halogenid Chlorid oder Bromid ist.

**Revendications**

1. Un procédé de synthès d'une zéolite béta qui consiste à préparer un mélange contenant des sources d'oxydes de métal alcalin (M), un oxyde d'aluminium, un dérivé de dibenzyldiméthylammonium (R) ajouté en tant que tel à ce mélange, un oxyde de silicium et de l'eau et présentant, en termes de rapport molaire, une composition comprise dans les limites suivantes:

| | |
|---|---|
| $SiO_2/Al_2O_3$ | 20—200 |
| $H_2O/SiO_2$ | 10—200 |
| $OH^-/SiO_2$ | 0,10—2,0 |
| $M/SiO_2$ | 0,05—1,0 |
| $R/SiO_2$ | 0,10—2,0 |

et à maintenir le mélange à une température de 80 à 200°C jusqu'à ce que se forment des cristaux de zéolite.

2. Le procédé selon la revendication 1, dans lequel ce mélange présente, en termes de rapport molaire, la composition suivante:

| | |
|---|---|
| $SiO_2/Al_2O_3$ | 30—120 |
| $H_2O/SiO_2$ | 20—60 |
| $OH^-/SiO_2$ | 0,20—1,0 |
| $M/SiO_2$ | 0,10—0,6 |
| $R/SiO_2$ | 0,20—1,0 |

3. Le procédé selon la revendication 1 ou la revendication 2, dans lequel ce dérivé de dibenzyldiméthylammonium est un halogénure ou son hydroxyde.

4. Le procédé selon la revendication 3, dans lequel cet halogénure est le chlorure ou le bromure.